# EUROPÄISCHE PATENTSCHRIFT

(11) **EP 4 173 758 B1**
(45) Veröffentlichungstag und Bekanntmachung des Hinweises auf die Patenterteilung: **31.07.2024**
(21) Anmeldenummer: 22202573.6
(22) Anmeldetag: 19.10.2022
(51) Int. Cl.: H01M 10/42, B25F 5/00, H02J 7/00

(54) **PROJEKTUNTERSTÜTZUNG DURCH SPRACHAUSGABE EINES AKKUPACKS**
PROJECT ASSISTANCE THROUGH VOICE OUTPUT OF BATTERY PACK
ASSISTANCE DE PROJET PAR SORTIE VOCALE D'UNE BATTERIE

(30) Priorität: 28.10.2021 DE 202021105910 U
(43) Veröffentlichungstag der Anmeldung: 03.05.2023
(73) Patentinhaber: Einhell Germany AG, 94405 Landau / Isar (DE)
(72) Erfinder: THANNHUBER, Dr. Markus, 94405 Landau/Isar (DE)
(74) Vertreter: Hofstetter, Schurack & Partner

(56) Entgegenhaltungen:
- DE-A1- 102017 206 554
- DE-A1- 102019 211 238
- US-A1- 2012 235 628
- US-A1- 2014 107 853
- US-A1- 2019 353 712

## Beschreibung

Die vorliegende Erfindung betrifft ein Akkupack für ein Elektrowerkzeug und ein Elektrogerät mit einem solchen Akkupack.

Zur Durchführung von Projekten unter Verwendung von Elektrogeräten, insbesondere Elektrowerkzeugen, beispielsweise im Heimwerkerbereich, kann das Bedürfnis nach einer Unterstützung bei der Durchführung des Projekts bestehen, beispielsweise, um einen Benutzer dabei anzuleiten, welche Arbeitsschritte oder Projektschritte in welcher Reihenfolge und/oder auf welche Weise durchgeführt werden sollten. Dokument DE 10 2019 211238 A1 beschreibt ein Sensormodul für ein Elektrogerät, wobei eine Ausgabeeinheit des Sensormoduls schrittweise Arbeitsanweisungen an einen Benutzer ausgeben kann.

Dokument US 2019/353712 A1 beschreibt ein Akkupack für ein Elektrowerkzeug mit drahtloser Kommunikation. Das Akkupack enthält Zellen, einen Stromsensor, einen Spannungssensor, einen Prozessor, einen Datenspeicher, einen Temperatursensor, einen Lautsprecher und eine drahtlose Kommunikationsschaltung.

Es ist eine Aufgabe der vorliegenden Erfindung, eine möglichst flexible Projektunterstützung für den Benutzer eines Elektrogeräts zur Verfügung zu stellen.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf dem Gedanken, ein Akkupack zur elektrischen Energieversorgung des Elektrogeräts als Schnittstelle zur Benutzerinteraktion zu verwenden, indem in dem Akkupack Benutzerinformationen zur Anleitung des Benutzers in ein Audiosignal umgewandelt wird, das zur Erzeugung einer Sprachausgabe durch das Akkupack benutzt wird.

Erfindungsgemäß wird ein Akkupack für ein Elektrogerät, welches ein Elektrowerkzeug ist, angegeben. Das Akkupack weist einen Datenspeicher auf, der Projektdaten betreffend eine vordefinierte Sequenz von Projektschritten, insbesondere von aufeinanderfolgenden Projektschritten, speichert, wobei die Projektdaten für jeden Projektschritt der Sequenz von Projektschritten eine Benutzerinformation beinhalten. Das Akkupack weist eine Steuereinheit auf, die dazu eingerichtet ist, für einen vorgegebenen Projektschritt der Sequenz ein den zugehörigen Benutzerinformationen entsprechendes Audiosignal zu erzeugen. Das Akkupack weist einen Lautsprecher auf, der mit der Steuereinheit zum Erhalten des Audiosignals verbunden ist und dazu eingerichtet ist, basierend auf dem Audiosignal eine Sprachausgabe zu erzeugen.

Das Akkupack ist mit dem Elektrogerät mechanisch und elektrisch verbindbar. Beispielsweise kann das Akkupack, insbesondere zerstörungsfrei lösbar, mit einem Gehäuse des Elektrogeräts verbunden werden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen.

Zur Energieversorgung des Elektrogeräts weist das Akkupack wenigstens eine Akkumulatorzelle auf, vorzugsweise mehrere in Reihe und/oder parallel verschaltete Akkumulatorzellen. Eine elektrische Verbindung der wenigstens einen Akkumulatorzelle mit dem Elektrogerät, beispielsweise einem Motor des Elektrogeräts, kann über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Die Projektschritte der Sequenz von Projektschritten spezifizieren ein Projekt oder einen Teil des Projekts, wobei wenigstens ein Teil der Projektschritte unter Verwendung des mit dem Akkupack betreibbaren Elektrogeräts durchgeführt werden kann. Insbesondere ist es nicht notwendigerweise erforderlich, dass das Elektrogerät in allen Projektschritten verwendet wird oder verwendet werden kann. In verschiedenen Projektschritten können auch verschiedene Elektrogeräte einsetzbar sein, wobei das Akkupack gegebenenfalls auch zum Betrieb mehrerer verschiedener Elektrogeräte ausgelegt sein kann.

Dass die Projektschritte in Form der vordefinierten Sequenz gegeben sind, kann insbesondere derart verstanden werden, dass die Sequenz einer definierten Reihenfolge der individuellen Projektschritte definiert. Die Reihenfolge der Projektschritte ist beispielsweise erforderlich oder vorteilhaft, um das gewünschte Projekt durchführen zu können. Ein Projektschritt kann dabei eine oder mehrere Tätigkeiten, die durch den Benutzer durchzuführen sind, beinhalten. Die Benutzerinformationen, die für einen Projektschritt in dem Datenspeicher gespeichert sind, beschreiben eine oder mehrere Tätigkeiten oder eine Bezeichnung des jeweiligen Projektschritts oder ein einzusetzendes Elektrogerät oder ein einzusetzendes sonstiges Zubehör oder Material oder dergleichen. Beispielsweise können die Benutzerinformationen Informationen betreffend eines oder mehrere Erfordernisse oder Empfehlungen zur Durchführung des jeweiligen Projektschritts beinhalten, wie etwa Informationen betreffend eine Werkzeugauswahl oder Werkzeugkonfiguration. Alternativ oder zusätzlich können die Benutzerinformationen auch Informationen zu Größen, Maßen, Formbemaßungen, Lagebemaßungen, Materialparametern und so weiter beinhalten.

Die Projektdaten beinhalten also insbesondere die Benutzerinformationen für die einzelnen Projektschritte, beinhalten insbesondere aber auch Informationen betreffend die entsprechende Reihenfolge der Projektschritte innerhalb der Sequenz. Unter Verwendung dieser Information kann die Steuereinheit die entsprechenden Benutzerinformationen insbesondere auch in der entsprechenden Reihenfolge der Projektschritte verarbeiten, also in ein entsprechendes Audiosignal umwandeln und durch den Lautsprecher ausgeben. Die Ausgabe der einzelnen Sprachausgaben erfolgt dabei vorzugsweise entsprechend einem jeweiligen Projektstatus, der der Steuereinheit durch eine Benutzerrückmeldung oder eine zeitliche Vorgabe oder eine sonstige Information zur Verfügung gestellt werden kann.

Die Projektdaten können auf einem externen Datenträger bereitgestellt und auf den Datenspeicher des Akkupacks geladen werden. Alternativ können die Projektdaten beispielsweise auch von einem externen elektronischen Gerät, beispielsweise einem Servercomputer oder einem mobilen elektronischen Endgerät über eine drahtlose Kommunikationsvorrichtung auf das Akkupack und insbesondere den Datenspeicher des Akkupacks geladen werden.

Durch das erfindungsgemäße Akkupack wird gewissermaßen eine omnipräsente Benutzerschnittstelle zur Verfügung gestellt, da der Benutzer zum Durchführen des Projekts das Elektrogerät und dementsprechend das Akkupack ohnehin benutzen kann und dieses daher mit hoher Wahrscheinlichkeit in Reichweite ist, wenn er eine entsprechende Anleitung benötigt. Durch den Sprachkanal als Informationskanal zur Anleitung des Benutzers ist zudem eine detaillierte Anleitung möglich, ohne dass der Benutzer seine aktuelle Tätigkeit unterbrechen muss beziehungsweise das Elektrogerät aus der Hand legen muss oder verlassen muss, um die Informationsquelle aufzusuchen und zu bedienen, wie es beispielsweise der Fall wäre, wenn die Anleitung über ein Smartphone oder einen Laptopcomputer oder dergleichen erfolgen würde.

Selbst wenn das Akkupack aktuell gerade nicht in Verwendung ist, der Benutzer also ein anderes Elektrogerät oder kein Elektrogerät benutzt, befindet sich das Akkupack in der Regel in der unmittelbaren Umgebung des Benutzers, sodass dieser selbst dann wie beschreiben angeleitet werden kann.

Ein weiterer Vorteil liegt darin, dass das Akkupack definitionsgemäß mit der wenigstens einen Akkumulatorzelle ausgestattet ist und dementsprechend stets Energie für den Betrieb der Steuereinheit beziehungsweise zur Kommunikation mit der externen Recheneinheit zur Verfügung steht. Selbst wenn das Akkupack beziehungsweise die Akkumulatorzellen nicht mehr ausreichend geladen sind, um einen Motor des Elektrogeräts anzutreiben oder dergleichen, steht nämlich in der Regel immer noch ausreichend Energie zum Betrieb der Steuereinheit und/oder zur Kommunikation zur Verfügung, da die hierfür erforderliche Energiemenge um ein Vielfaches kleiner ist und Akkumulatorzellen, insbesondere Lithium-Ionen-Akkumulatorzellen, in der Regel nicht vollständig entladen werden.

Die Benutzerinformationen können beispielsweise als Benutzertext vorliegen. Dieser kann dann beispielsweise durch einen Sprachsyntheseschaltkreis der Steuereinheit in das Audiosignal umgewandelt werden. Der Benutzertext beinhaltet eines oder mehrere Worte, vorzugsweise mehrere Worte in einer vorbestimmten Abfolge. Der Benutzertext ist insbesondere in Form einer Textdatei oder einer Binärdatei, welche den Benutzertext darstellt, auf dem Datenspeicher gespeichert.

Die Bereitstellung der Benutzerinformationen als Benutzertext hat insbesondere den Vorteil, dass nur eine relativ geringe Menge an Daten von außerhalb des Akkupacks auf den Datenspeicher des Akkupacks übertragen werden muss. Insbesondere ist es nicht erforderlich, digitalisierte Audiospektren oder sonstige Sprachdateien, welche die Sprachausgabe direkt definieren könnten, auf das Akkupack zu übertragen, da dieses selbst den Sprachsyntheseschaltkreis beinhaltet. Dies wiederum hat den Vorteil, dass zur Kommunikation des Akkupacks mit einer externen Recheneinheit, beispielsweise dem Servercomputer, der im Folgenden auch als Cloudcomputer oder Cloudrechner bezeichnet werden kann, Funknetzwerke eingesetzt werden können, die lediglich für einen relativ geringen Datendurchsatz ausgelegt sind. Es kommen also insbesondere Mobilfunknetzwerke oder Niedrigenergieweitverkehrnetze, LPWAN (englisch: "Low Power Wide Area Network"), und insbesondere NB-loT-Netzwerke (englisch: "Narrow-Band Internet of Things") in Frage. So kann in entsprechenden Ausführungsformen mit Vorteil beispielsweise auf ein WLAN-Modul in dem Akkupack verzichtet werden.

Zum Erzeugen des dem Benutzertext entsprechenden Audiosignals wählt die Steuereinheit oder der Sprachsyntheseschaltkreis den zu dem vorgegebenen Projektschritt gehörenden Benutzertext aus beziehungsweise liest diesen aus dem Datenspeicher aus. Basierend auf dem Benutzertext, der wie beschrieben insbesondere als Textdatei oder Binärdatei vorliegt, erzeugt der Sprachsyntheseschaltkreis das Audiosignal unter Verwendung eines an sich bekannten Verfahrens zur Sprachsynthese. Mit anderen Worten wird der Benutzertext per Sprachsynthese in das Audiosignal umgewandelt.

Die Benutzerinformationen können auch als Audiodatei vorliegen. Die Steuereinheit kann dann die Audiodatei direkt auslesen, um das Audiosignal zu erzeugen. So lässt sich die Komplexität der Steuereinheit begrenzen.

In alternativen Ausführungen kann der Sprachsyntheseschaltkreis extern zu dem Akkupack vorliegen, beispielsweise auf dem Servercomputer. Dieser kann dann den umgewandelten Benutzertext, zum Beispiel als Audiodatei, als Benutzerinformation an das Akkupack übertragen.

Der vorgegebene Projektschritt kann auf verschiedene Art und Weise vorgegeben werden. Beispielsweise kann die Steuereinheit in verschiedenen Ausführungsformen dazu eingerichtet sein, einen aktuellen Projektstatus zu bestimmen und den vorgegebenen Projektschritt abhängig von dem aktuellen Projektstatus aus der Sequenz auszuwählen beziehungsweise aus dem Datenspeicher auszulesen.

Der Projektstatus entspricht dabei insbesondere der Information, welche Projektschritte der Sequenz von Projektschritten bereits vergangen oder erledigt sind beziehungsweise welche noch bevorstehen beziehungsweise welcher der aktuelle oder unmittelbar bevorstehende Projektschritt ist. Diese Information kann die Steuereinheit beispielsweise basierend auf einem vorgegebenen Zeitplan, basierend auf einer Benutzereingabe oder auf Messungen von Betriebsparametern des Elektrogeräts oder des Akkupacks bestimmen.

Alternativ kann die Steuereinheit den Projektstatus, insbesondere über eine Kommunikationsschnittstelle des Akkupacks zur drahtlosen Kommunikation, von der externen Recheneinheit erhalten. Auf diese Weise kann auch eine Synchronisierung verschiedener Informationskanäle für den Benutzer erzielt werden. Zum einen kann also der aktuelle Projektstatus durch die Steuereinheit des Akkupacks bestimmt werden, zum anderen kann der aktuelle Projektstatus auch anderen elektronischen Geräten, beispielsweise mobilen elektronischen Endgeräten oder Desktopcomputern oder dergleichen, zur Verfügung gestellt werden, die dem Benutzer bei Bedarf weitere andere oder anders aufbereitete Informationen betreffend das Projekt und insbesondere einen aktuellen Projektschritt zur Verfügung stellen können.

Gemäß zumindest einer Ausführungsform ist die Steuereinheit dazu eingerichtet, den Projektstatus zumindest teilweise abhängig von einer Benutzereingabe zu bestimmen.

Die Benutzereingabe kann dabei einer Eingabe durch den Benutzer in das Akkupack entsprechen. Alternativ kann die Benutzereingabe einer Benutzereingabe an dem Elektrogerät entsprechen und die Steuereinheit kann die Information über die Benutzereingabe von dem Elektrogerät erhalten. Alternativ kann die Benutzereingabe auch an einem externen elektronischen Gerät, beispielsweise einem elektronischen mobilen Endgerät, etwa einem Smartphone oder Tabletcomputer, erfolgen und die Steuereinheit erhält die Information über die Benutzereingabe über die Kommunikationsverbindung mit dem externen elektronischen Gerät.

Auf diese Weise kann der Benutzer der Steuereinheit also über die Benutzereingabe die Informationen zur Verfügung stellen, dass er aktuell eine bestimmte Anleitung benötigt oder dass der bisher aktuelle Projektschritt nun abgeschlossen ist.

Insbesondere kann das Akkupack ein Eingabegerät aufweisen, das zum Erfassen einer Benutzerinteraktion eingerichtet ist, und die Steuereinheit ist dazu eingerichtet, die Benutzereingabe basierend auf der erfassten Benutzerinteraktion zu erkennen.

Die Benutzerinteraktion kann beispielsweise als Einwirkung des Benutzers auf das Eingabegerät verstanden werden. Dabei kann das Eingabegerät beispielsweise einen mechanischen Schalter oder Taster, ein berührungsempfindliches Eingabeelement und/oder ein Mikrofon zum Erfassen der Benutzerinteraktion aufweisen.

Im Falle eines Schalters oder Tasters wirkt der Benutzer auf das Eingabegerät ein, indem er den Schalter oder Taster drückt oder betätigt. Im Falle eines berührungsempfindlichen Eingabeelements, beispielsweise eines Touchdisplays oder eines sonstigen Bereichs zur Berührungserkennung wirkt der Benutzer auf das Eingabegerät ein, indem er dieses berührt. Im Falle eines Mikrofons kann der Benutzer auf das Eingabegerät einwirken, indem er selbst einen Sprachbefehl oder eine Spracheingabe an das Mikrofon abgibt.

Die Verwendung eines Mikrofons zum Erfassen der Benutzerinteraktion ist besonders vorteilhaft, da der Benutzer dann gegebenenfalls von seiner aktuellen Tätigkeit oder Körperhaltung nicht abweichen muss, um die Benutzereingabe zu tätigen. Der Benutzer kann also beispielsweise vordefinierte Sprachbefehle, wie beispielsweise "weiter" oder "nächster Schritt" formulieren, um die Steuereinheit über den Projektstatus zu informieren.

Ferner kann der Benutzer auch durch die Einwirkung auf das Eingabegerät die Steuereinheit dazu veranlassen, dass der Projektstatus auf einen vorherigen, also insbesondere scheinbar bereits abgeschlossenen, Projektschritt gesetzt wird, dass eine Sprachausgabe wiederholt wird und so weiter. Hierzu können verschiedene Eingabegeräte oder verschiedene Sprachbefehle für unterschiedliche Zwecke vorgesehen sein.

Insbesondere ist also auch ein Rücksprung in einen vorherigen Projektschritt ist möglich, beispielsweise ausgelöst durch einen Sprachbefehl "zurück" oder dergleichen des Benutzers. Auch ein Wiederholen des jeweiligen Projektschritts ist denkbar.

In manchen Ausführungsformen kann die Steuereinheit auch dazu eingerichtet sein, den Benutzer über den Lautsprecher, gegebenenfalls unter Verwendung des Sprachsyntheseschaltkreises, durch eine sprachliche Aufforderung zu der Benutzereingabe aufzufordern.

Gemäß zumindest einer Ausführungsform ist die Steuereinheit dazu eingerichtet, einen initialen Projektschritt der Sequenz als den vorgegebenen Projektschritt zu bestimmen. Die Steuereinheit ist dazu eingerichtet, nach dem Erzeugen des Audiosignals die Benutzereingabe zu erkennen und nach dem Erkennen der Benutzereingabe einen gemäß der Sequenz auf den initialen Projektschritt folgenden, insbesondere unmittelbar folgenden Projektschritt der Sequenz als bevorstehenden Projektschritt der Sequenz zu bestimmen. Die Steuereinheit ist dazu eingerichtet, für den bevorstehenden Projektschritt ein den zugehörigen Benutzerinformationen entsprechendes weiteres Audiosignal zu erzeugen. Insbesondere ist der Lautsprecher dazu eingerichtet, basierend auf dem weiteren Audiosignal eine weitere Sprachausgabe zu erzeugen.

Mit anderen Worten ist der Projektstatus zunächst durch den initialen Projektschritt gegeben und das Akkupack gibt die Sprachausgabe entsprechend den für den initialen Projektschritt hinterlegten Benutzerinformationen aus. Abhängig von der Benutzereingabe wird der Projektstatus dann um einen Projektschritt auf den bevorstehenden Projektschritt verschoben und die dementsprechende Sprachausgabe erzeugt.

In analoger Weise kann das Akkupack, insbesondere die Steuereinheit, gegebenenfalls der Sprachsyntheseschaltkreis, und der Lautsprecher, für einen Projektschritt nach dem anderen gemäß der Sequenz jeweils nach einer entsprechenden Benutzereingabe die Sprachausgabe erzeugen, bis dies für alle Projektschritte der Sequenz erfolgt ist.

Gemäß zumindest einer Ausführungsform weist das Akkupack eine Kommunikationsschnittstelle zur drahtlosen Kommunikation mit einer externen Recheneinheit auf.

Die Kommunikationsschnittstelle kann insbesondere zur drahtlosen Kommunikation über ein Funknetzwerk eingerichtet sein, beispielsweise über ein Mobilfunknetz oder ein LPWAN. Das Funknetz kann insbesondere gemäß GSM, UMTS, LTE, 5G oder NB-IoT ausgestaltet sein. Ferner sind auch nicht-zellbasierte Ansätze wie etwa LoRa oder ZigBee möglich.

Gemäß zumindest einer Ausführungsform ist die Steuereinheit dazu eingerichtet, insbesondere über die Kommunikationsschnittstelle, ein Eingabesignal von der externen Recheneinheit zu erhalten und die Benutzereingabe basierend auf dem Eingabesignal zu erkennen.

Die Benutzereingabe kann daher an der externen Recheneinheit vorgenommen werden, beispielsweise an einem mobilen elektronischen Endgerät wie etwa einem Smartphone, einem Laptopcomputer oder einem Tabletcomputer. Hierzu kann beispielsweise eine entsprechende Applikation auf der externen Recheneinheit zum Erfassen der Benutzereingabe implementiert werden oder die Eingabe kann über einen Browser oder einen entsprechenden Webserver an die Steuereinheit übermittelt werden.

Somit kann die Benutzereingabe auch getätigt werden und der Projektstatus dementsprechend auch abhängig von der Benutzereingabe bestimmt werden, wenn sich das Akkupack gerade nicht in Reichweite des Benutzers befindet, sodass er eine mechanische Taste an dem Akkupack nicht ohne einen Standortwechsel betätigen könnte beziehungsweise eine Spracheingabe über das Mikrofon nicht ohne Standortwechsel durchführen kann.

Gemäß zumindest einer Ausführungsform ist die Steuereinheit dazu eingerichtet, eine Statusinformation betreffend den Projektstatus, insbesondere über die Kommunikationsschnittstelle, von der externen Recheneinheit zu erhalten und den Projektstatus zumindest teilweise abhängig von der Statusinformation zu bestimmen.

Dementsprechend kann die externe Recheneinheit basierend auf einer Benutzereingabe oder sonstigen Informationen selbst die Statusinformation erzeugen und dem Akkupack wie beschrieben bereitstellen.

Gemäß zumindest einer Ausführungsform ist die Steuereinheit dazu eingerichtet, einen Ausgangsstrom und/oder eine Ausgangsspannung der wenigstens einen Akkumulatorzelle zu steuern oder zu regeln, um dem Elektrogerät elektrische Leistung zum Betrieb des Elektrogeräts bereitzustellen. Die Steuereinheit ist dazu eingerichtet, den Ausgangsstrom und/oder die Ausgangsspannung zu überwachen und den Projektstatus zumindest teilweise abhängig von einem Ergebnis der Überwachung zu bestimmen.

Die elektrische Leistung kann dem Elektrogerät insbesondere zum Betreiben eines Motors des Elektrogeräts bereitgestellt werden.

Durch die Überwachung der Ausgangsspannung und/oder des Ausgangsstroms und eine entsprechende Rückkopplung in dem zeitlichen Verlauf der Ausgangsspannung und/oder des Ausgangsstroms von dem Elektrogerät, die sich beispielsweise in Form sogenannter Ripples ausdrückt, kann die Steuereinheit Informationen über einen Verlauf der Motorbewegung, beispielsweise einer Anzahl von Umdrehungen, eines Drehmoments des Motors und so weiter, ziehen. Auf diese Weise kann die Steuereinheit Informationen darüber erhalten, welche Tätigkeit beziehungsweise in welcher Häufigkeit oder Form eine bestimmte Tätigkeit durch das Elektrogerät durchgeführt wurde. Entsprechende Informationen zum Abgleich können in den Projektdaten hinterlegt sein.

Auf diese Weise kann die Steuereinheit jedenfalls zum Teil den Projektstatus abschätzen, ohne auf eine Benutzereingabe angewiesen zu sein.

Gemäß zumindest einer Ausführungsform ist die Steuereinheit dazu eingerichtet, die Projektdaten, insbesondere über die Kommunikationsschnittstelle, von der externen Recheneinheit zu erhalten, insbesondere über das Mobilfunknetz oder das LPWAN, und auf dem Datenspeicher zu speichern.

Mit anderen Worten kann ein Projektplan in Form der Projektdaten für die Sequenz von Projektschritten auf diese Weise über den Cloudserver, einen Webbrowser und einen entsprechenden Webserver, ein mobiles elektronisches Endgerät oder dergleichen in drahtloser Weise dem Akkupack zur Verfügung gestellt werden.

Beispielsweise können auf dem Akkupack beziehungsweise dem Datenspeicher auch verschiedene Sequenzen von Projektschritten gespeichert sein und je nachdem, welches Projekt aktuell ausgeführt werden soll, können die entsprechenden Projektdaten genutzt werden. Die Auswahl des Projekts kann beispielsweise ebenfalls durch eine Benutzereingabe, insbesondere einen Sprachbefehl, erfolgen.

Gemäß einem weiteren Aspekt der Erfindung wird ein Elektrogerät mit einem erfindungsgemäßen Akkupack angegeben. Das Elektrogerät ist insbesondere dazu eingerichtet, von dem Akkupack mit elektrischer Energie zum Betrieb des Elektrogeräts, insbesondere eines Motors des Elektrogeräts, versorgt zu werden.

Das Elektrogerät ist insbesondere als Elektrowerkzeug ausgebildet, beispielsweise als Akkuschrauber, Bohrmaschine, Bohrhammer, Kappsäge, Tauchsäge, Kreissäge, Stichsäge und so weiter. In anderen Ausführungsformen ist das Elektrogerät als Beleuchtungsvorrichtung ausgebildet.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Im Folgenden wird die Erfindung unter Bezugnahme auf schematische Zeichnungen näher erläutert. Dabei zeigt:
- Fig.: eine schematische Blockdarstellung einer beispielhaften Ausführungsform eines erfindungsgemäßen Akkupacks.

Das Akkupack 1 enthält wenigstens eine Akkumulatorzelle 2 und eine Steuereinheit 4 mit einem Batteriemanagementschaltkreis 6. Der Batteriemanagementschaltkreis 6 ist mit den Akkumulatorzellen 2 und einer elektrischen Schnittstelle 7 des Akkupacks verbunden. Über die elektrische Schnittstelle 7 kann das Akkupack 1 mit einem Elektrogerät (nicht gezeigt) verbunden werden, um diesem in den Akkumulatorzellen 2 gespeicherte elektrische Energie zum Betrieb des Elektrogeräts bereitzustellen. Der Batteriemanagementschaltkreis 6 kann dabei die Strom- und/oder Spannungsabgabe regeln oder steuern.

Außerdem weist das Akkupack 1 einen Datenspeicher 3 auf, welcher Projektdaten betreffend eine vordefinierte Sequenz von Projektschritten speichert. Insbesondere enthalten die Projektdaten für jeden der Projektschritte Benutzerinformationen, beispielsweise in Form von Benutzertext, der beispielsweise als Textdatei oder Binärdatei gespeichert sein kann. Die Textdatei oder Binärdatei kann die Steuereinheit 4, beispielsweise der Batteriemanagementschaltkreis 6, über eine Kommunikationsschnittstelle 8 des Akkupacks 1 zur drahtlosen Kommunikation von einer externen Recheneinheit (nicht gezeigt) erhalten und auf dem Datenspeicher 3 speichern.

Beispielsweise kann das Akkupack 1, insbesondere die Steuereinheit 4, einen Sprachsyntheseschaltkreis 5 aufweisen, der dazu eingerichtet ist, für einen vorgegebenen Projektschritt der Sequenz den zugehörigen Benutzertext aus dem Datenspeicher 3 auszulesen und basierend auf dem Benutzertext ein entsprechendes Audiosignal mittels eines bekannten Sprachsyntheseverfahrens zu erzeugen und einem Lautsprecher 11 des Akkupacks 1 bereitzustellen. Der Lautsprecher 11 erhält das Audiosignal und kann dann basierend auf dem Audiosignal eine Sprachausgabe an einen Benutzer des Elektrogeräts erzeugen, um diesen bei der Durchführung des Projekts zu unterstützen, insbesondere um dem Benutzer Informationen betreffend den vorgegebenen Projektschritt zur Verfügung zu stellen.

Auf diese Weise kann der Benutzer durch entsprechende Sprachausgaben Schritt für Schritt durch die einzelnen Projektschritte geleitet werden.

Alternativ zu dem Benutzertext können die Benutzerinformationen direkt als jeweilige Audiodateien auf dem Datenspeicher 3 gespeichert sein. Die Steuereinheit 4 kann dann, statt den Benutzertext per Sprachsynthese in das Audiosignal umzuwandeln, das Audiosignal direkt durch Auslesen der jeweiligen Audiodatei erzeugen. Der Sprachsyntheseschaltkreis 5 ist dann nicht erforderlich.

Um der Steuereinheit 4 die Information bereitzustellen, welches der aktuellen Projektstatus ist, kann beispielsweise der Benutzer mit dem Akkupack 1 über ein entsprechendes Eingabegerät interagieren und so eine Rückmeldung geben, dass er bereit für die nächste Sprachausgabe entsprechend dem nächsten Projektschritt ist. Beispielsweise kann das Eingabegerät ein Mikrofon 10 umfassen, sodass der Benutzer die Benutzereingabe durch einen entsprechenden Sprachbefehl tätigen kann. Die Steuereinheit 4 kann einen Sprachprozessor (nicht gezeigt) enthalten, um den Sprachbefehl entsprechend zu verarbeiten. Alternativ kann der Sprachprozessor auch auf einem Servercomputer vorliegen und die Steuereinheit 4 kann den Sprachbefehl beziehungsweise eine entsprechende Audiodatei an den Sprachprozessor übermitteln.

Alternativ oder zusätzlich kann das Eingabegerät einen mechanischen Taster 9 aufweisen, den der Benutzer betätigen kann, um anzuzeigen, dass er für die nächste Sprachausgabe bereit ist. Alternativ oder zusätzlich zu dem Taster 9 kann auch ein sonstiger mechanischer Schalter oder eine berührungsempfindliche Fläche oder dergleichen vorgesehen werden.

Eine alternative Möglichkeit zur Bestimmung des aktuellen Projektstatus besteht darin, dass der Benutzer die Benutzereingabe über ein externes elektronisches Gerät (nicht gezeigt), beispielsweise ein Smartphone, tätig und das externe elektronische Gerät ein entsprechendes Signal drahtlos über die Kommunikationsschnittstelle 8 der Steuereinheit 4 zur Verfügung stellt.

### BEZUGSZEICHENLISTE:

- 1: Akkupack
- 2: Akkumulatorzellen
- 3: Datenspeicher
- 4: Steuereinheit
- 5: Sprachsyntheseschaltkreis
- 6: Batteriemanagementschaltkreis
- 7: elektrische Schnittstelle
- 8: Kommunikationsschnittstelle
- 9: Taster
- 10: Mikrofon
- 11: Lautsprecher

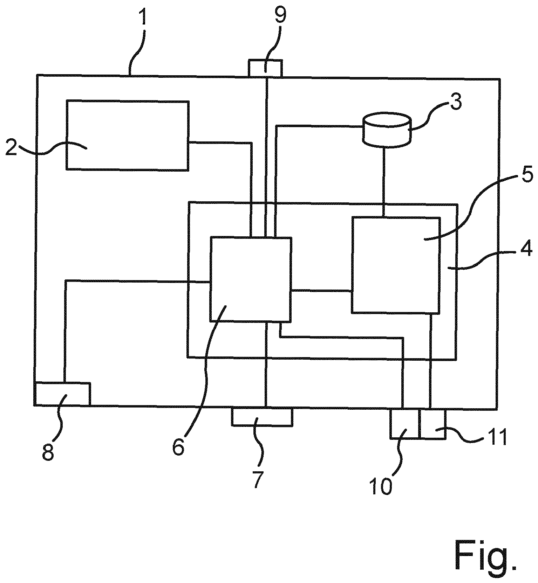

## Patentansprüche

1. Akkupack (1) für ein Elektrowerkzeug, das Akkupack (1) aufweisend
- einen Datenspeicher (3), der Projektdaten betreffend eine vordefinierte Sequenz von Projektschritten speichert, wobei die Projektdaten für jeden Projektschritt der Sequenz Benutzerinformationen beinhalten;
- eine Steuereinheit (4), die dazu eingerichtet ist, für einen vorgegebenen Projektschritt der Sequenz ein den zugehörigen Benutzerinformationen entsprechendes Audiosignal zu erzeugen; und
- einen Lautsprecher (11), der mit der Steuereinheit (4) zum Erhalten des Audiosignals verbunden ist und dazu eingerichtet ist, basierend auf dem Audiosignal eine Sprachausgabe zu erzeugen.

2. Akkupack (1) nach Anspruch 1, wobei die Steuereinheit (4) dazu eingerichtet ist, einen aktuellen Projektstatus zu bestimmen und den vorgegebenen Projektschritt abhängig von dem aktuellen Projektstatus aus der Sequenz auszuwählen.

3. Akkupack (1) nach Anspruch 2, wobei die Steuereinheit (4) dazu eingerichtet ist, den Projektstatus zumindest teilweise abhängig von einer Benutzereingabe zu bestimmen.

4. Akkupack (1) nach einem der Ansprüche 1 oder 2, wobei
- die Steuereinheit (4) dazu eingerichtet ist, einen initialen Projektschritt der Sequenz als den vorgegebenen Projektschritt zu bestimmen;
- die Steuereinheit (4) dazu eingerichtet ist, nach dem Erzeugen des Audiosignals eine Benutzereingabe zu erkennen und nach dem Erkennen der Benutzereingabe einen auf den initialen Projektschritt folgenden Projektschritt der Sequenz als bevorstehenden Projektschritt der Sequenz zu bestimmen; und
- die Steuereinheit (4) dazu eingerichtet ist, für den bevorstehenden Projektschritt ein den zugehörigen Benutzerinformationen entsprechendes weiteres Audiosignal zu erzeugen.

5. Akkupack (1) nach einem der Ansprüche 3 oder 4, wobei das Akkupack (1) ein Eingabegerät (9) aufweist, das zum Erfassen einer Benutzerinteraktion eingerichtet ist, und die Steuereinheit (4) dazu eingerichtet ist, die Benutzereingabe basierend auf der erfassten Benutzerinteraktion zu erkennen.

6. Akkupack (1) nach Anspruch 5, wobei das Eingabegerät (9) einen mechanischen Schalter, einen mechanischen Taster, ein berührungsempfindliches Eingabeelement und/oder ein Mikrofon zum Erfassen der Benutzerinteraktion aufweist.

7. Akkupack (1) nach einem der Ansprüche 3 oder 4, wobei die Steuereinheit (4) dazu eingerichtet ist, ein Eingabesignal von einer externen Recheneinheit zu erhalten und die Benutzereingabe basierend auf dem Eingabesignal zu erkennen.

8. Akkupack (1) nach einem der Ansprüche 2 oder 3, wobei
- das Akkupack (1) wenigstens eine Akkumulatorzelle (2) aufweist und die Steuereinheit (4) dazu eingerichtet ist, einen Ausgangsstrom und/oder eine Ausgangsspannung der wenigstens einen Akkumulatorzelle (2) zu steuern oder zu regeln, um dem Elektrogerät elektrische Leistung zum Betrieb des Elektrogeräts bereitzustellen; und
- die Steuereinheit (4) dazu eingerichtet ist, den Ausgangsstrom und/oder die Ausgangsspannung zu überwachen und den Projektstatus zumindest teilweise abhängig von einem Ergebnis der Überwachung zu bestimmen.

9. Akkupack (1) nach einem der Ansprüche 2 oder 3, wobei die Steuereinheit (4) dazu eingerichtet ist, eine Statusinformation von einer externen Recheneinheit zu erhalten und den Projektstatus zumindest teilweise abhängig von der Statusinformation zu bestimmen.

10. Akkupack (1) nach einem der vorhergehenden Ansprüche, wobei die Steuereinheit (4) dazu eingerichtet ist, die Projektdaten von einer externen Recheneinheit zu erhalten, insbesondere über ein Mobilfunknetz oder ein Niedrigenergieweitverkehrnetz, und auf dem Datenspeicher (3) zu speichern.

11. Akkupack (1) nach einem der vorhergehenden Ansprüche, wobei die Projektdaten für jeden Projektschritt der Sequenz einen Benutzertext beinhalten, welcher die Benutzerinformationen darstellt.

12. Akkupack (1) nach Anspruch 11, wobei die Steuereinheit (4) einen Sprachsyntheseschaltkreis (5) aufweist, der dazu eingerichtet ist, das Audiosignal dem Benutzertext des vorgegebenen Projektschritts entsprechend zu erzeugen.

13. Akkupack (1) nach Anspruch 12, wobei der Sprachsyntheseschaltkreis (5) dazu eingerichtet ist, den Benutzertext durch Sprachsynthese in das Audiosignal umzuwandeln.

14. Akkupack (1) nach einem der Ansprüche 1 bis 10, wobei die Projektdaten für jeden Projektschritt der Sequenz eine Audiodatei beinhalten, welche die Benutzerinformationen darstellt.

15. Akkupack (1) nach Anspruch 14, wobei die Steuereinheit (4) dazu eingerichtet ist, die Audiodatei auszulesen, um das Audiosignal zu erzeugen.

16. Elektrogerät mit einem Akkupack (1) nach einem der vorhergehenden Ansprüche, wobei das Elektrogerät insbesondere als Elektrowerkzeug ausgebildet ist.

## Claims

1. A battery pack (1) for a power tool, the battery pack (1) comprising
- a data memory (3), which stores project data relating to a predefined sequence of project steps, wherein the project data includes user information for each project step of the sequence;
- a control unit (4), which is configured to generate an audio signal corresponding to the associated user information for a predefined project step of the sequence; and
- a speaker (11), which is connected to the control unit (4) for obtaining the audio signal and is configured to generate a voice output based on the audio signal.

2. The battery pack (1) according to claim 1, wherein the control unit (4) is configured to determine a current project status and to select the predefined project step from the sequence depending on the current project status.

3. The battery pack (1) according to claim 2, wherein the control unit (4) is configured to determine the project status at least partially depending on a user input.

4. The battery pack (1) according to any one of claims 1 or 2, wherein
- the control unit (4) is configured to determine an initial project step of the sequence as the predefined project step;
- the control unit (4) is configured to recognize a user input after generating the audio signal and to determine a project step of the sequence following the initial project step as an upcoming project step of the sequence after recognizing the user input; and
- the control unit (4) is configured to generate a further audio signal corresponding to the associated user information for the upcoming project step.

5. The battery pack (1) according to any one of claims 3 or 4, wherein the battery pack (1) comprises an input device (9), which is configured for capturing a user interaction, and the control unit (4) is configured to recognize the user input based on the captured user interaction.

6. The battery pack (1) according to claim 5, wherein the input device (9) comprises a mechanical switch, a mechanical button, a touch-sensitive input element and/or a microphone for capturing the user interaction.

7. The battery pack (1) according to any one of claims 3 or 4, wherein the control unit (4) is configured to obtain an input signal from an external computing unit and to recognize the user input based on the input signal.

8. The battery pack (1) according to any one of claims 2 or 3, wherein
- the battery pack (1) comprises at least one battery cell (2) and the control unit (4) is configured to control or regulate an output current and/or an output voltage of the at least one battery cell (2), to provide electrical power to the electric appliance for the operation of the electric appliance; and
- the control unit (4) is configured to monitor the output current and/or the output voltage and to determine the project status at least partially depending on a result of monitoring.

9. The battery pack (1) according to any one of claims 2 or 3, wherein the control unit (4) is configured to obtain status information from an external computing unit and to determine the project status at least partially depending on the status information.

10. The battery pack (1) according to any one of the preceding claims, wherein the control unit (4) is configured to obtain the project data from an external computing unit, in particular via a mobile radio network or a low power wide area network, and to store it on the data memory (3).

11. The battery pack (1) according to any one of the preceding claims, wherein the project data includes a user text, which represents the user information, for each project step of the sequence.

12. The battery pack (1) according to claim 11, wherein the control unit (4) comprises a voice synthesis circuit (5), which is configured to generate the audio signal corresponding to the user text of the predefined project step.

13. The battery pack (1) according to claim 12, wherein the voice synthesis circuit (5) is configured to convert the user text into the audio signal by voice synthesis.

14. The battery pack (1) according to any one of claims 1 to 10, wherein the project data includes an audio file, which represents the user information, for each project step of the sequence.

15. The battery pack (1) according to claim 14, wherein the control unit (4) is configured to read out the audio file to generate the audio signal.

16. An electric appliance with a battery pack (1) according to any one of the preceding claims, wherein the electric appliance is in particular formed as a power tool.

## Revendications

1. Batterie d'accumulateurs (1) destinée à un outil électrique, la batterie d'accumulateurs (1) comportant
- une mémoire de données (3) qui mémorise des données de projet relatives à une séquence prédéfinie d'étapes de projet, les données de projet contenant des informations utilisateur pour chaque étape de projet de la séquence ;
- une unité de commande (4) qui est conçue pour générer un signal audio correspondant aux informations utilisateur associées pour une étape de projet spécifiée de la séquence ; et
- un haut-parleur (11) qui est relié à l'unité de commande (4) pour recevoir le signal audio et qui est conçu pour générer une sortie vocale sur la base du signal audio.

2. Batterie d'accumulateurs (1) selon la revendication 1, l'unité de commande (4) étant conçue pour déterminer un statut de projet actuel et pour sélectionner l'étape de projet spécifiée dans la séquence en fonction de l'état de projet actuel.

3. Batterie d'accumulateurs (1) selon la revendication 2, l'unité de commande (4) étant conçue pour déterminer l'état de projet au moins partiellement en fonction d'une entrée de l'utilisateur.

4. Batterie d'accumulateurs (1) selon l'une des revendications 1 ou 2,
- l'unité de commande (4) étant conçue pour déterminer une étape de projet initiale de la séquence comme étape de projet spécifiée ;
- l'unité de commande (4) étant conçue pour reconnaître une entrée d'utilisateur après avoir généré le signal audio et, après avoir reconnu l'entrée d'utilisateur, pour déterminer une étape de projet de la séquence, suivant l'étape de projet initiale, comme étape de projet à venir de la séquence ; et
- l'unité de commande (4) étant conçue pour générer un autre signal audio, correspondant aux informations utilisateur associées, pour l'étape de projet à venir.

5. Batterie d'accumulateurs (1) selon l'une des revendications 3 ou 4, la batterie d'accumulateurs (1) comportant un appareil d'entrée (9) qui est conçu pour détecter une interaction d'utilisateur, et l'unité de commande (4) étant conçue pour reconnaître l'entrée d'utilisateur sur la base de l'interaction d'utilisateur détectée.

6. Batterie d'accumulateurs (1) selon la revendication 5, l'appareil d'entrée (9) comportant un commutateur mécanique, un bouton mécanique, un élément d'entrée tactile et/ou un microphone pour détecter l'interaction d'utilisateur.

7. Batterie d'accumulateurs (1) selon l'une des revendications 3 ou 4, l'unité de commande (4) étant conçue pour recevoir un signal d'entrée d'une unité informatique extérieure et pour reconnaître l'entrée d'utilisateur sur la base du signal d'entrée.

8. Batterie d'accumulateurs (1) selon l'une des revendications 2 ou 3,
- la batterie d'accumulateurs (1) comprenant au moins un élément de batterie d'accumulateurs (2) et l'unité de commande (4) étant conçue pour commander ou réguler un courant de sortie et/ou une tension de sortie de l'au moins un élément de batterie d'accumulateurs (2) afin de fournir à l'appareil électrique l'énergie électrique nécessaire au fonctionnement des appareils électriques ; et
- l'unité de commande (4) étant conçue pour surveiller le courant de sortie et/ou la tension de sortie et pour déterminer l'état de projet au moins partiellement en fonction d'un résultat de la surveillance.

9. Batterie d'accumulateurs (1) selon l'une des revendications 2 ou 3, l'unité de commande (4) étant conçue pour recevoir une information d'état d'une unité informatique extérieure et pour déterminer l'état de projet au moins partiellement en fonction de l'information d'état.

10. Batterie d'accumulateurs (1) selon l'une des revendications précédentes, l'unité de commande (4) étant conçue pour recevoir les données de projet d'une unité informatique extérieure, notamment par le biais d'un réseau de téléphonie mobile ou d'un réseau longue distance à faible consommation d'énergie, et pour les mémoriser dans la mémoire de données (3).

11. Batterie d'accumulateurs (1) selon l'une des revendications précédentes, les données de projet contenant pour chaque étape de projet de la séquence un texte utilisateur qui représente les informations utilisateur.

12. Batterie d'accumulateurs (1) selon la revendication 11, l'unité de commande (4) comportant un circuit de synthèse vocale (5) qui est conçu pour générer le signal audio en fonction du texte utilisateur de l'étape de projet spécifiée.

13. Batterie d'accumulateurs (1) selon la revendication 12, le circuit de synthèse vocale (5) étant conçu pour convertir le texte utilisateur en signal audio par synthèse vocale.

14. Batterie d'accumulateurs (1) selon l'une des revendications 1 à 10, les données de projet contenant pour chaque étape de projet de la séquence un fichier audio qui représente les informations utilisateur.

15. Batterie d'accumulateurs (1) selon la revendication 14, l'unité de commande (4) étant conçue pour lire le fichier audio afin de générer le signal audio.

16. Appareil électrique comprenant une batterie d'accumulateurs (1) selon l'une des revendications précédentes, l'appareil électrique étant conçu en particulier comme un outil électrique.
